# FASCICULE DE BREVET EUROPEEN

(11) **EP 1 051 689 B1**
(45) Date de publication et mention de la délivrance du brevet: **29.08.2001**
(21) Numéro de dépôt: 99900918.6
(22) Date de dépôt: 14.01.1999
(51) Int. Cl.: G06K 19/07

(54) **CARTE A MICROPROCESSEUR COMPORTANT UN CIRCUIT DE COMMUNICATION CABLE**
CHIPKARTE MIT HARDWAREÜBERTRAGUNGSSCHALTUNG
MICROPROCESSOR CARD COMPRISING A WIRED COMMUNICATION CIRCUIT

(30) Priorité: 27.01.1998 FR 9800858
(43) Date de publication de la demande: 15.11.2000
(73) Titulaire: Gemplus, 13881 Gémenos Cedex (FR)
(72) Inventeur: RAYON, Stéphane, Avenue de la Marine, F-13600 La Ciotat (FR); COOREMAN, Pascal, 23, avenue Beau Pin, F-13008 Marseille (FR); GOMEZ, Bertrand, F-13360 Roquevaire (FR)
(86) Numéro de dépôt international: FR9900054
(87) Numéro de publication internationale: WO9938116

(56) Documents cités:
- EP-A- 0 513 507
- DE-A- 19 535 968
- US-A- 5 420 412
- US-A- 5 729 004

## Description

L'invention concerne les cartes à microprocesseur qui sont capables d'effectuer des opérations sur des données fournies par des mémoires associées au microprocesseur ou par un terminal auquel elles sont connectées.

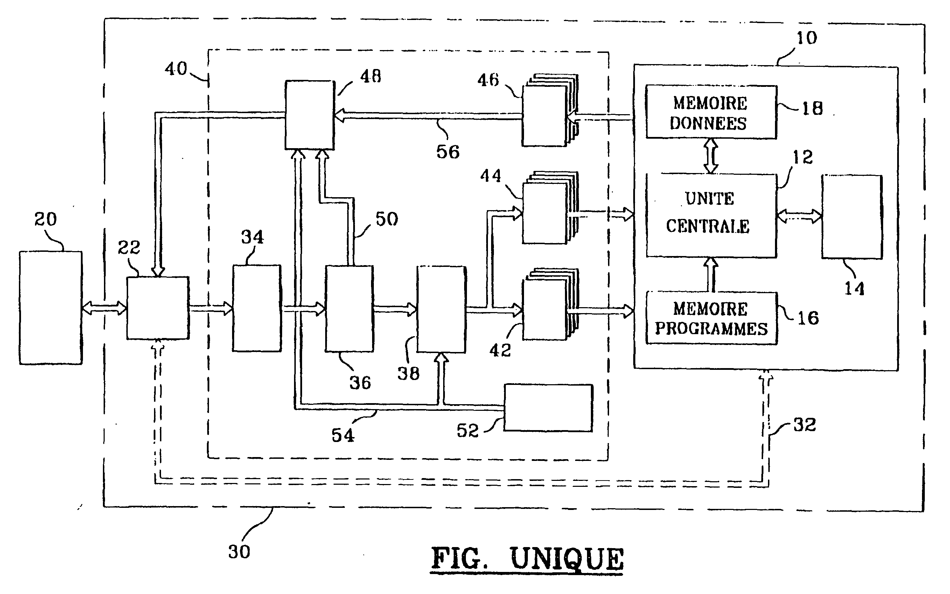

De manière simplifiée, un microprocesseur 10 (figure unique) comprend une unité centrale 12 qui communique avec une mémoire de programmes 16, une mémoire de données 18 et une mémoire 14 du type RAM, RAM étant l'acronyme anglo-saxon pour "Random Access Memory". Ce microprocesseur 10 est connecté à un terminal 20 par l'intermédiaire d'une liaison 32 et d'une broche de contacts 22.

Les signaux électriques qui sont appliqués par le terminal 20 sur la broche de contacts 22 sont analysés par le microprocesseur 10 à l'aide d'un programme particulier dit de communication qui est enregistré dans la mémoire de programmes 16, ce programme de communication étant adapté au protocole de communication qui régit les échanges d'informations entre la carte et le terminal dans les deux sens.

L'analyse des signaux électriques appliqués à la broche de contacts 22 constitue une tâche relativement longue pour l'unité centrale 12, tâche qui mobilise une partie importante des mémoires.

De manière similaire, la sortie des informations du microprocesseur 10 vers le terminal 20 par l'intermédiaire de la broche de contacts 22 mobilise également du temps de l'unité centrale et de la place dans les mémoires.

Une solution est proposée par US-A-5729004 qui décrit un dispositif de communication ("I/O device" en anglais) servant d'intermédiaire entre le microprocesseur et le terminal, Ce dispositif de communication assure, en plus des tâches usuelles de conversion série/parallèle et parallèle/série des données, une fonction de détection et de vérification de la parité des données transmises par le terminal à la carte, ce qui a l'avantage de décharger le microprocesseur de cette tâche. Toutefois, d'autres tâches telles que la séparation des données et des instructions incombent toujours au microprocesseur. US-A-5729004 divulguent toutes les caractéristiques du préambule de la revendication 1.

Le but de la présente invention est donc de réaliser une carte à microprocesseur qui ne présente pas les inconvénients précités de manière à dégager du temps au microprocesseur pour d'autre tâches et pour libérer la capacité des mémoires pour ces autres tâches.

Une carte à microprocesseur selon l'invention est définie à la revendication 1.

L'invention a l'avantage de faciliter le développement d'une carte et notamment de réduire la durée et les frais de qualification de celle-ci, le dispositif de communication sous forme de partie indépendante pouvant être qualifié une fois pour toute.

L'invention sera mieux comprise à l'aide de la description suivante d'un exemple particulier de réalisation, ladite description étant faite en relation avec le dessin joint dans lequel la figure unique est un schéma fonctionnel d'une carte à microprocesseur présentant des caractéristiques de l'invention.

Comme on l'a indiqué dans le préambule, une carte 30 à microprocesseur de l'art antérieur comprend essentiellement un microprocesseur 10 qui est connecté à un terminal 20 par l'intermédiaire d'une liaison bidirectionnelle 32, représentée en pointillés, et d'une borne de contacts 22. Les signaux électriques binaires qui sont appliqués par le terminal 20 sur les contacts 22 sont analysés directement par le microprocesseur 10. Par ailleurs, les signaux électriques binaires fournis par le microprocesseur 10 sont transmis au terminal 20 par l'intermédiaire de la liaison 32 et des contacts 22.

Dans une telle architecture, le microprocesseur 10 intervient directement dans le processus de communication bidirectionnelle, ce qui présente certains inconvénients, notamment ceux exposés dans le préambule.

Selon l'invention, le processus de communication bidirectionnelle est mis en oeuvre par un dispositif de communication 40, qui est disposé entre les bornes de contacts 22 et le microprocesseur 10.

Le dispositif de communication 40 comprend :
- un circuit d'analyse 34 des signaux électriques appliqués par le terminal 20 sur la borne de contacts 22 de la carte 30 ; ce circuit 34 analyse les signaux électriques apparaissant sur les contacts 22 de manière à les présenter sous la forme d'une série d'impulsions électriques de type binaire ;
- un circuit de vérification 36 de la série d'impulsions électriques binaires pour déterminer l'intégrité de la série d'impulsions électriques, c'est-à-dire pour vérifier si la série est complète conformément à des règles prédéterminées, par exemple par l'usage d'un chiffre binaire de parité ou d'un code redondant dans la série ; ce circuit de vérification 36 fournit un signal binaire ou un code binaire indiquant le résultat de cette vérification sur une liaison 50 ;
- un circuit de détermination 38 de chaque caractère de la commande ou instruction, adresse ou donnée à partir des impulsions de la série vérifiée ;
- une première pluralité de registres 42 pour enregistrer, d'une part, les caractères de la commande ou instruction et, d'autre part, les caractères de l'adresse, au fur et à mesure de leur détermination par le circuit de détermination 38 ;
- une deuxième pluralité de registres 44 pour enregistrer les caractères des données fournis par le circuit de détermination 38 ;
- un circuit d'accusé-réception 52 de la commande qui est associé à la première pluralité de registres 42 pour analyser les caractères de la commande ou instruction et fournir un signal ou code binaire indiquant la borne ou la mauvaise réception de la commande sur une liaison 54,
- une troisième pluralité de registres 46 pour enregistrer, d'une part, les données fournies par le microprocesseur 10 et, d'autre part, les codes d'état indiquant les états d'exécution de la commande par le microprocesseur 10, et
- un circuit de transmission 48 vers le terminal 10 par l'intermédiaire des contacts 22 des signaux et/ou codes fournis par le circuit de vérification 36 sur la liaison 50, par le circuit d'accusé-réception 52 sur une liaison 54 et par la troisième pluralité de registres 46 sur une liaison 56.

Les différents circuits composant le dispositif de communication 40 sont adaptés au protocole de communication qui a été choisi. Ce protocole de communication est du type asynchrone et peut être celui connu sous l'appellation RS232, en ce qui concerne une liaison série couramment utilisé entre un ordinateur dit personnel et ses périphériques, ou sous les appellations V22, V23, etc ... en ce qui concerne la liaison par modem.

Pour vérifier l'intégrité de la série d'impulsions, le terminal 20 doit être prévu pour ajouter une information redondante dans les signaux transmis, information que le circuit de vérification 36 est capable d'en vérifier la présence. Il peut s'agir de la présence d'un chiffre binaire ou bit de parité ou d'un code cyclique redondant. Il est à remarquer que de nombreux protocoles de communication prévoient une telle redondance pour vérifier l'intégrité de l'information transmise. Au cas où cette vérification n'aboutit pas, la commande n'est pas exécutée et cette décision est indiquée par un code sur la liaison 50.

Cette vérification de l'intégrité ne concerne que la succession des chiffres binaires correspondant aux impulsions de la série ; la vérification de la commande est effectuée par le circuit d'accusé-réception 52 qui détermine que la commande est complète et correcte et l'indique sur la liaison 54 par un code particulier. En cas d'erreur, le circuit 52 peut l'indiquer par un autre code particulier. Ces codes particuliers sont transmis au circuit de transmission 48 mais aussi au circuit de détermination des caractères 38 pour lui indiquer, en cas d'accusé-réception correct, que les caractère suivants sont à aiguiller vers la deuxième pluralité de registres 44 prévus pour enregistrer les données qui sont transmises par le terminal après la commande si cette dernière a bien été reçue dans son intégralité.

## Revendications

1. Carte (30) à microprocesseur (10) et à contacts (22), le microprocesseur (10) communiquant avec un terminal (20) par l'intermédiaire d'un dispositif de communication (40) sous forme de circuit câblé disposé entre les contacts (22) et le microprocesseur (10) et opérant selon un protocole de communication asynchrone avec vérification de l'intégrité des signaux transmis, **caractérisée en ce que** ledit dispositif de communication (40) comprend des moyens pour retourner au moins une information vers le terminal (20) en fonction de l'intégrité des signaux reçus.

2. Carte à microprocesseur et à contacts selon la revendication 1, **caractérisée en ce que** ledit dispositif de communication (40) comprend :
- un circuit d'analyse (34) des signaux électriques transmis par le terminal (20) de manière à fournir une série d'impulsions électriques,
- un circuit de vérification (36) de la série d'impulsions électriques pour déterminer l'intégrité de la série d'impulsions électriques et fournir un code (50) indiquant le résultat de la vérification,
- un circuit de détermination (38) de chaque caractère à partir des impulsions de la série,
- une première pluralité de registres (42) pour enregistrer les caractères de la commande et de l'adresse fournis par le circuit de détermination (38) des caractères et les mettre à la disposition du microprocesseur (10),
- une deuxième pluralité de registres (44) pour enregistrer les caractères des données fournis par le circuit de détermination (38) des caractères et les mettre à la disposition du microprocesseur (10),
- un circuit d'accusé-réception de la commande (52), associé à la première pluralité de registres (42), pour analyser les caractères de la commande et fournir un code (54) indiquant l'état de réception de la commande,
- une troisième pluralité de registres (46) pour enregistrer les codes des données et d'état d'exécution de la commande fournis par le microprocesseur (10), et
- un circuit de transmission (48) vers le terminal (20) des codes fournis par le circuit de vérification (36), le circuit d'accusé-réception de la commande (52) et la troisième pluralité de registres (46).

3. Carte à microprocesseur et à contacts selon la revendication 2, **caractérisée en ce que** le circuit d'analyse (34) comprend des moyens pour détecter les signaux transmis et les présenter sous forme d'une série d'impulsions électriques de type binaire.

4. Carte à microprocesseur et à contacts selon la revendication 2 ou 3, **caractérisée en ce que** le circuit de vérification (36) comprend des moyens pour vérifier la présence ou non d'un chiffre binaire de parité ou d'un code cyclique redondant et pour fournir un signal ou code correspondant.

## Patentansprüche

1. Karte (30) mit Mikroprozessor (10) und Kontakten (22), wobei der Mikroprozessor (10) über eine Kommunikationsvorrichtung (40) in Form einer verkabelten, zwischen den Kontakten (22) und dem Mirkoprozessor (10) angeordneten und nach einem asynchronen Kommunikationsprotokoll mit Unversehrtheitsprüfung der übertragenen Signale arbeitenden Schaltung mit einem Terminal (20) kommuniziert, **dadurch gekennzeichnet**, dass die besagte Kommunikationsvorrichtung (40) Mittel umfasst, um mindestens eine Information entsprechend der Unversehrtheit der empfangenen Signale an das Terminal (20) zurückzusenden.

2. Karte mit Mikroprozessor und Kontakten nach Anspruch 1, **dadurch gekennzeichnet**, dass die besagte Kommunikationsvorrichtung (40) folgende Mittel umfasst:
- eine Analyseschaltung (34) der vom Terminal (20) übertragenen elektrischen Signale, um eine Reihe von elektrischen Impulsen zu liefern,
- eine Prüfschaltung (36) der elektrischen Impulsreihe, um die Unversehrtheit der elektrischen Impulsreihe zu ermitteln und einen das Ergebnis der Prüfung anzeigenden Code (50) zu liefern,
- eine Ermittlungsschaltung (36) eines jeden Zeichens ab der Impulse der Reihe,
- eine erste Vielzahl von Registern (42), um die Zeichen des Befehls und die Adresse, die von der Ermittlungsschaltung (38) der Zeichen geliefert werden, aufzuzeichnen und sie dem Mikroprozessor (10) zur Verfügung zu stellen,
- eine zweite Vielzahl von Registern (44), um die Zeichen der von der Bestimmungsschaltung (38) der Zeichen gelieferten Daten aufzuzeichnen und sie dem Mikroprozessor (10) zur Verfügung zu stellen,
- eine Empfangsbestätigungsschaltung des Befehls (52), die der ersten Vielzahl von Registern (42) zugeordnet ist, um die Zeichen des Befehls zu analysieren und einen Code (54) zu liefern, der den Empfangszustand des Befehls anzeigt,
- eine dritte Vielzahl von Registern (46), um die vom Mikroprozessor (10) gelieferten Codes der Daten und des Ausführungszustands des Befehls aufzuzeichnen, und
- eine Übertragungsschaltung (48) zum Terminal (20) der von der Prüfschaltung (36), der Empfangsbestätigungsschaltung des Befehls (52) und der dritten Vielzahl von Registern (46) gelieferten Codes.

3. Karte mit Mikroprozessor und Kontakten nach Anspruch 2, **dadurch gekennzeichnet**, dass die Analyseschaltung (34) Mittel umfasst, um die übertragenen Signale zu erfassen und sie in Form einer Reihe von elektrischen Impulsen binären Typs zu präsentieren.

4. Karte mit Mikroprozessor und Kontakten nach Anspruch 2 oder 3, **dadurch gekennzeichnet**, dass die Prüfschaltung (36) Mittel umfasst, um die Präsenz oder nicht einer binären Paritätszahl oder eines redundanten zyklischen Codes zu prüfen und ein entsprechendes Signal bzw. einen entsprechenden Code zu liefern.

## Claims

1. A card (30) with a microprocessor (10) and contacts (22), the microprocessor (10) communicating with a terminal (20) by means of a communication device (40) in the form of a hard-wired circuit disposed between the contacts (22) and the microprocessor (10) and operating according to an asynchronous communication protocol with integrity check on the signals transmitted, **characterised in that** the said communication device (40) comprises means for returning at least one item of information to the terminal (20) according to the integrity of the signals received.

2. A card with a microprocessor and contacts according to Claim 1, **characterised in that** the said communication device (40) comprises:
- a circuit (34) for analysing the electrical signals transmitted by the terminal (20) so as to supply a series of electrical pulses,
- a circuit (36) for checking the series of electrical pulses in order to determine the integrity of the series of electrical pulses and to supply a code (50) indicating the result of the check,
- a circuit (38) for determining each character from the pulses in the series,
- a first plurality of registers (42) for recording the characters of the command and of the address supplied by the character determination circuit (38) and to make them available to the microprocessor (10),
- a second plurality of registers (44) for recording the characters of the data supplied by the character determination circuit (38) and to make them available to the microprocessor (10),
- a circuit for acknowledging reception of the command (52), associated with the first plurality of registers (42), for analysing the characters of the command and supplying a code (54) indicating the state of reception of the command,
- a third plurality of registers (46) for recording the codes of the data and of the state of execution of the command supplied by the microprocessor (10), and
- a circuit (48) for transmitting to the terminal (20) codes supplied by the check circuit (36), the circuit for acknowledging reception of the command (52) and the third plurality of registers (46).

3. A card with a microprocessor and contacts according to Claim 2, **characterised in that** the analysis circuit (34) comprises means for detecting the signals transmitted and presenting them in the form of a series of electrical pulses of the binary type.

4. A card with a microprocessor and contacts according to Claim 2 or 3, **characterised in that** the check circuit (36) comprises means for checking the presence or not of a parity bit and a cyclic redundancy code and for supply a corresponding signal or code.
